# EUROPÄISCHE PATENTANMELDUNG

(11) **EP 4 520 580 A1**
(43) Veröffentlichungstag der Anmeldung: **12.03.2025**
(21) Anmeldenummer: 24198170.3
(22) Anmeldetag: 03.09.2024
(51) Int. Cl.: B60L 53/30, B60L 53/10, H05K 7/14

(54) **SCHNELLLADESTATION FÜR ELEKTROFAHRZEUGE**

(30) Priorität: 04.09.2023 DE 102023123763
(71) Anmelder: Compleo Charging Solutions GmbH & Co. KG, 58513 Lüdenscheid (DE)
(72) Erfinder: DILGERT, Simon, 57072 Siegen (DE); MAAS, Igor, 41462 Neuss (DE)
(74) Vertreter: Gottschald Patentanwälte Partnerschaft mbB

(57) **Zusammenfassung**

Die Erfindung betrifft eine Schnellladestation für Elektrofahrzeuge mit mindestens einem Leistungsmodul (2), wobei das Leistungsmodul (2) Leistungselektronik, insbesondere einen Stromwandler, aufweist, wobei das Leistungsmodul (2) in einer montierten Position über eine Befestigungsanordnung (3) in der Schnellladestation (1) befestigt ist. Es wird vorgeschlagen, dass die Befestigungsanordnung (3) eine Schwenklagerung (9) aufweist, über die das Leistungsmodul (2) schwenkbar befestigt ist, sodass das Leistungsmodul (2) zwischen der montierten Position und einer Wartungsposition verschwenkbar ist.

## Beschreibung

Die vorliegende Erfindung betrifft eine Schnellladestation für Elektrofahrzeuge gemäß dem Oberbegriff von Anspruch 1 sowie ein Verfahren zur Wartung einer Schnellladestation gemäß Anspruch 11.

Schnellladestationen, auch bekannt als high performance charger, sind Gleichstromladestationen für elektrische Fahrzeuge, insbesondere Automobile, aber auch Lastkraftfahrzeuge, Schiffe und dergleichen.

Neben den Anschaffungskosten sind auch die Wartungskosten, teilweise gebildet durch Aufwände für Wartungstechniker, ein relevanter Teil der Kosten einer Schnellladestation. Zusätzlich benötigen bekannte Schnellladestationen, insbesondere im Bereich über 150 kW, viel Raum um die Schnellladestation herum, um die Wartungszugänge freizuhalten. Dieser Platz muss freigehalten werden, sodass eine bekannte Schnellladestation beispielsweise nicht an einer Wand platziert werden kann.

Eine bekannte Schnellladestation (Alpitronic Hypercharger) weist Leistungsmodule auf, die als Befestigungsanordnung Schienen aufweisen, an denen die Leistungsmodule aus der Schnellladestation heraus gefahren werden können, um von einer montierten Position in eine Wartungsposition gebracht zu werden. Die Schienen müssen sehr stabil und langlebig ausgelegt werden, damit diese Bewegung zuverlässig funktioniert und wenig wackelt.

Es ist dabei eine Herausforderung, die Befestigung der Leistungsmodule stabil und kosteneffizient zu bewerkstelligen.

Der Erfindung liegt das Problem zugrunde, die bekannte Schnellladestation derart auszugestalten und weiterzubilden, dass eine stabilere und/oder kostengünstigere Befestigung der Leistungsmodule bereitgestellt wird.

Das obige Problem wird durch die Merkmale des kennzeichnenden Teils von Anspruch 1 gelöst.

Wesentlich ist die grundsätzliche Überlegung, dass die Leistungsmodule verschwenkbar befestigt werden können. Eine Schwenklagerung ist stabil, das Leistungsmodul korrigiert seine Position in einem gewissen Rahmen selbst und "fällt" quasi in seine montierte Position. Eine Schwenklagerung neigt weniger zum Verkanten als eine Linearführung. Auch das Herstellen und Lösen der Schwenklagerung zum Herausnehmen bzw. Einsetzen des Leistungsmoduls ist einfacher möglich als bei zwei linearen Schienen. Zusätzlich ist nach einem Verschwenken auf einfache Art und Weise bereits eine Seite des Leistungsmoduls arretiert, sodass gegenüber einer Linearführung, bei der das Leistungsmodul unten und oben arretiert wird, ein Arbeitsschritt entfällt.

Im Einzelnen wird vorgeschlagen, dass die Befestigungsanordnung eine Schwenklagerung aufweist, über die das Leistungsmodul schwenkbar befestigt ist, sodass das Leistungsmodul zwischen der montierten Position und einer Wartungsposition verschwenkbar ist.

Die montierte Position ist die voll funktionsfähige Position, die das Leistungsmodul während eines Ladebetriebs der Ladestation regelmäßig einnimmt.

Gemäß Anspruch 2 kann vorgesehen sein, dass das Leistungsmodul erst in der Wartungsposition aus der Schnellladestation entnommen werden kann. Durch einen vordefinierten Arbeitsablauf steigt die Sicherheit und es wird verhindert, dass das Leistungsmodul unkontrolliert aus der Schnellladestation fällt. Zusätzlich kann eine Verschwenksicherung vorgesehen sein.

Anspruch 3 beschreibt bevorzugte Ausgestaltungen der Schwenklagerung. Durch ein hakenförmiges Gegenlagerelement am Leistungsmodul lässt sich die Schwenklagerung in der montierten Position ohne weitere Elemente gegen ein Herausnehmen des Leistungsmoduls sichern. Durch das Verschwenken wird die Sicherung automatisch aufgelöst.

Bei einer Ausgestaltung gemäß Anspruch 4 weist die Schnellladestation einen Modulfuß auf, über den das Leistungsmodul in der Wartungsposition am Boden abgestützt werden kann. So steht das Leistungsmodul auf einfache Art und Weise in der Wartungsposition stabil. Der Modulfuß kann abnehmbar sein und standardmäßig in der Schnellladestation verstaut werden. Insbesondere ist nur ein Modulfuß für alle Leistungsmodule vorgesehen, wodurch weniger Stauraum benötigt wird. Der Modulfuß kann auch teleskopierbar sein, wodurch noch weniger Stauraum in der Schnellladestation benötigt.

Gemäß Anspruch 5 sind Modulgriffe vorgesehen, die ebenfalls lösbar und in der Schnellladestation verstaut sein können. Mit diesen kann das Leistungsmodul in der Wartungsposition aus der Schnellladestation gehoben werden.

Die Ansprüche 6 bis 8 betreffen bevorzugte Ausgestaltungen, die zu einer Schnellladestation führen, die einen besonders geringen Platzbedarf für Wartungszugänge hat. Es ist insbesondere möglich, die Schnellladestation mit dem Rücken an eine Wand oder dergleichen zu Stellen. Neben der Schnellladestation können Parkplätze angelegt werden und der Wartungszugang befindet sich vorzugsweise nur vorne.

Anspruch 9 betrifft eine Ausgestaltung, bei der das Leistungsmodul durch das Schwenken in die montierte Position einen oder mehrere elektrische Anschlüsse automatisch kontaktiert. Das ist besonders bei einer Schwenklagerung gut möglich, da die Positionierung präzise möglich ist und ein Einrasten des Leistungsmoduls erlaubt. Außerdem erreicht das Leistungsmodul bei einer Schwenkbewegung sicher seine Endstellung, nachdem der Kipppunkt überschritten ist.

Anspruch 10 betrifft bevorzugte Leistungsklassen der Schnellladestation. Je größer diese ist, desto wichtiger wird besonders der Platzbedarf.

Nach einer weiteren Lehre gemäß Anspruch 11, der eigenständige Bedeutung zukommt, wird ein Verfahren zur Wartung einer vorschlagsgemäßen Schnellladestation, wobei ein Leistungsmodul aus der Schnellladestation geschwenkt wird, vorzugsweise, wobei der Modulgriff und/oder der Modulfuß mit einem der Leistungsmodule verbunden werden, beansprucht.

Auf alle Ausführungen zu der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Schnellladestation von außen,
- Fig. 2: die Schnellladestation im geöffneten Zustand,
- Fig. 3: das Verschwenken eines Leistungsmoduls bei montiertem Modulfuß und
- Fig. 4: eine Detailansicht der Schwenklagerung beim Verschwenken.

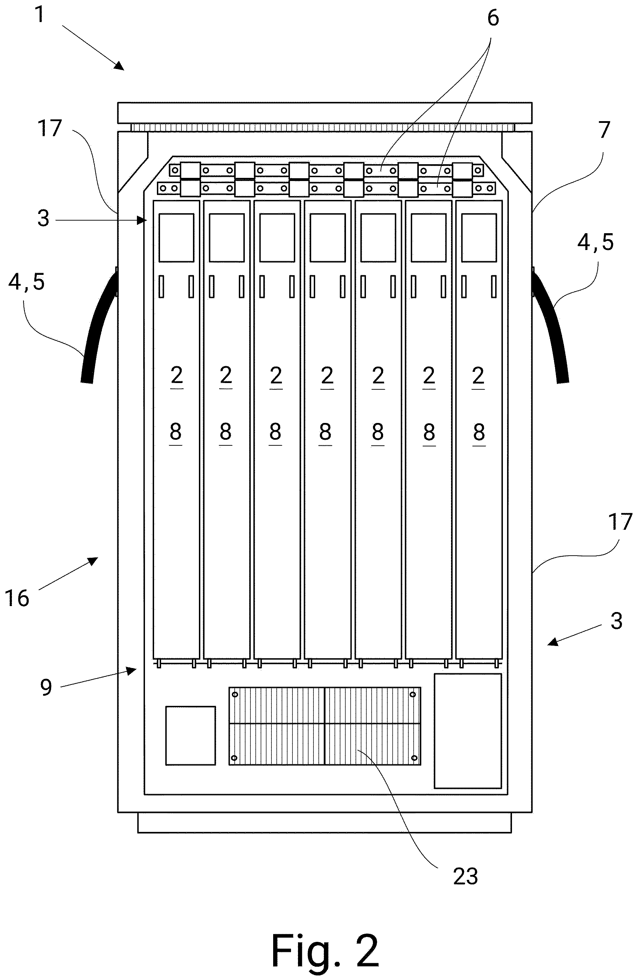

Das in den Figuren dargestellte und insoweit bevorzugte Ausführungsbeispiel betrifft eine Schnellladestation 1 für Elektrofahrzeuge mit mindestens einem Leistungsmodul 2, wobei das Leistungsmodul 2 Leistungselektronik, insbesondere einen Stromwandler, aufweist. Das Leistungsmodul 2 ist in einer montierten Position über eine Befestigungsanordnung 3 in der Schnellladestation 1 befestigt. Fig. 2 zeigt diese montierte Position. In Fig. 2 ist die Schnellladestation 1 geöffnet. Bei geschlossener Schnellladestation 1 und wenn das Leistungsmodul 2 verwendet wird, befindet sich dieses, insbesondere immer, in der montierten Position.

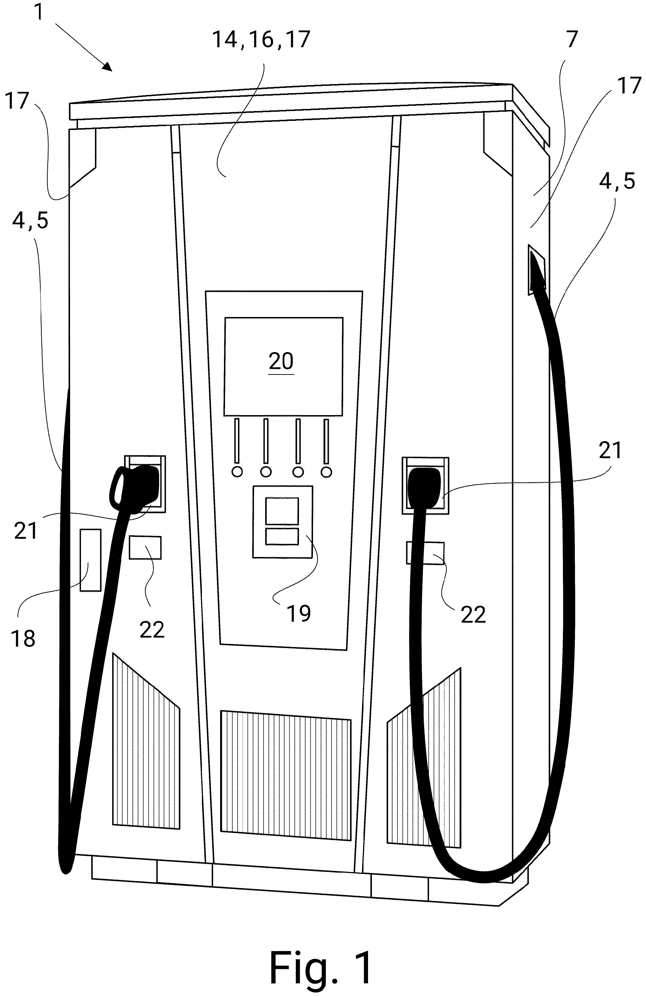

Fig. 1 zeigt eine Außenansicht einer vorschlagsgemäßen Schnellladestation 1 für Elektrofahrzeuge. Diese weist mindestens einen Anschlusspunkt 4 für ein Elektrofahrzeug, hier ein fest angeschlagenes Ladekabel 5, auf. Vorzugsweise weist die Schnellladestation 1 mindestens, hier genau, zwei Anschlusspunkte 4 auf. Eine Schnellladestation 1 dient zum Laden eines Elektrofahrzeugs mittels Gleichstroms und einer Leistung von zumeist mindestens 50 kW. Üblicherweise ist die Schnellladestation 1 dafür an ein Wechselstromnetz angeschlossen.

Wie in der geöffneten Ansicht in Fig. 2 erkennbar ist, weist die Schnellladestation 1 mindestens ein einzeln handhabbares Leistungsmodul 2 auf. Hier weist die Schnellladestation 1 sieben Leistungsmodule 2 auf, die jeweils einen Teil der Gesamtleistung der Schnellladestation 1 zur Verfügung stellen, hier beispielsweise jeweils 30 kW. Die Leistungsmodule 2 können hier und vorzugsweise flexibel auf die Anschlusspunkte 4 aufgeteilt werden.

Der Begriff "einzeln handhabbar" ist hier breit zu verstehen. Das Leistungsmodul 2 wiegt hier beispielsweise etwa 39 kg, ist also nicht leicht handhabbar. Es ist jedoch einzeln herausnehmbar und die Komponenten des Leistungsmoduls 2 sind gerade nicht einzeln in der Schnellladestation 1 verbaut. Vorzugsweise beträgt das Gewicht eines Leistungsmoduls 2 mindestens 20 kg, weiter vorzugsweise mindestens 30 kg.

Betrachtet wird nun zuerst nur ein Leistungsmodul 2, alle Aussagen zu diesem Leistungsmodul 2 können für weitere Leistungsmodule 2 entsprechend gelten. Das Leistungsmodul 2 weist Leistungselektronik auf. Die Leistungselektronik weist eine Stromrichteranordnung auf. Die Stromrichteranordnung dient hier und vorzugsweise zur Wandlung einer dreiphasigen Netzspannung als Eingangsspannung der Schnellladestation 1 in eine Gleichspannung. Hier und vorzugsweise weist die Leistungselektronik einen Gleichrichter und einen nachgeschalteten Gleichspannungswandler auf, die nicht dargestellt sind. Erkennbar sind im oberen Bereich der Schnellladestation 1 Gleichstromschienen 6 zur Verteilung der Ausgangsleistung der Leistungsmodule 2 auf die Anschlusspunkte 4. Der Wechselspannungseingang ist hier im unteren Bereich angeordnet und nicht dargestellt. Die Schnellladestation 1 weist ein Stationsgehäuse 7 auf, in dem das Leistungsmodul 2, hier die Leistungsmodule 2, angeordnet ist oder sind. Das Leistungsmodul 2 weist ebenfalls ein Gehäuse 8 auf.

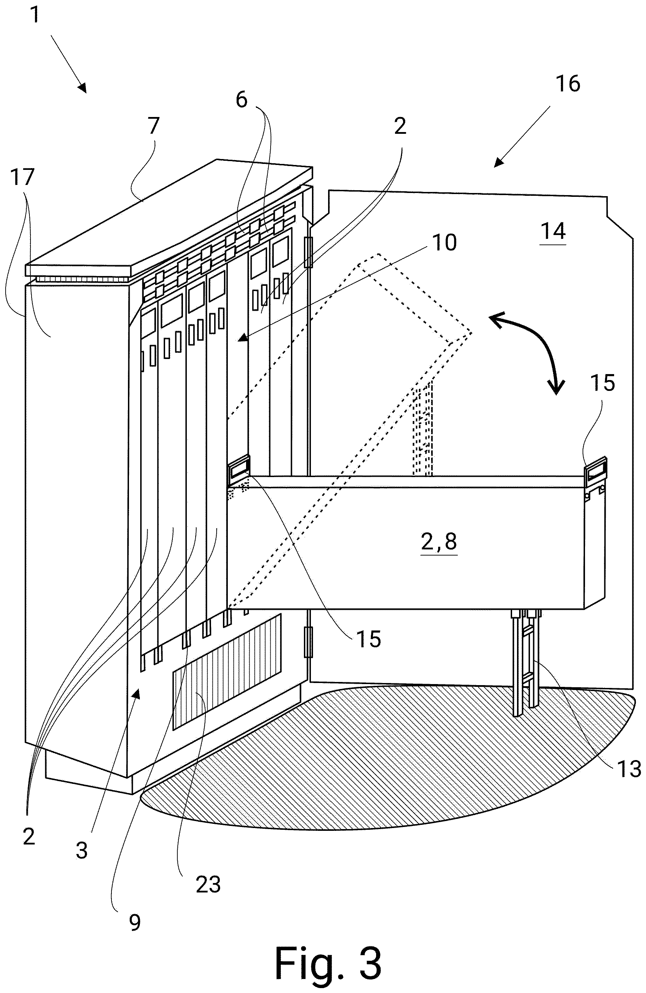

Wesentlich ist nun, dass die Befestigungsanordnung 3 eine Schwenklagerung 9 aufweist, über die das Leistungsmodul 2 schwenkbar befestigt ist, sodass das Leistungsmodul 2 zwischen der montierten Position und einer Wartungsposition verschwenkbar ist. Fig. 3 zeigt den Vorgang des Verschwenkens. In der Horizontalen befindet sich das Leistungsmodul 2 in der Wartungsposition, in der Vertikalen in der montierten Position.

Die Schnellladestation 1 weist hier und vorzugsweise eine Aufnahme 10 für das Leistungsmodul 2 auf, in der das Leistungsmodul 2 in der montierten Position aufgenommen ist. Die Aufnahme 10 umgibt das Leistungsmodul 2 in mindestens vier, vorzugsweise fünf orthogonalen Raumrichtungen. Dabei wird von insgesamt sechs orthogonalen Raumrichtungen ausgegangen, also den drei Dimensionen einer Orthogonalbasis jeweils in zwei Richtungen. Das Leistungsmodul 2 ist aus der Aufnahme 10 heraus schwenkbar. Hier und vorzugsweise weist die Schnellladestation 1 mehrere einzeln verschwenkbare Leistungsmodule 2 auf.

Wie in Fig. 3 erkennbar ist das Leistungsmodul 2 hier und vorzugsweise über seine kürzeste Kante schwenkbar.

Hier und vorzugsweise ist es so, dass das Leistungsmodul 2 in der montierten Position erst in die Wartungsposition verschwenkt werden muss, bevor das Leistungsmodul 2 von der Befestigungsanordnung 3 gelöst und aus der Schnellladestation 1 entnommen werden kann.

Zusätzlich oder alternativ weist die Befestigungsanordnung 3 lösbare Befestigungselemente, insbesondere Stifte, auf, mit denen das Leistungsmodul 2 in der montierten Position gegen das Verschwenken gesichert ist. Die Befestigungselemente verbinden das Leistungsmodul 2 hier und vorzugsweise mit der Aufnahme 10.

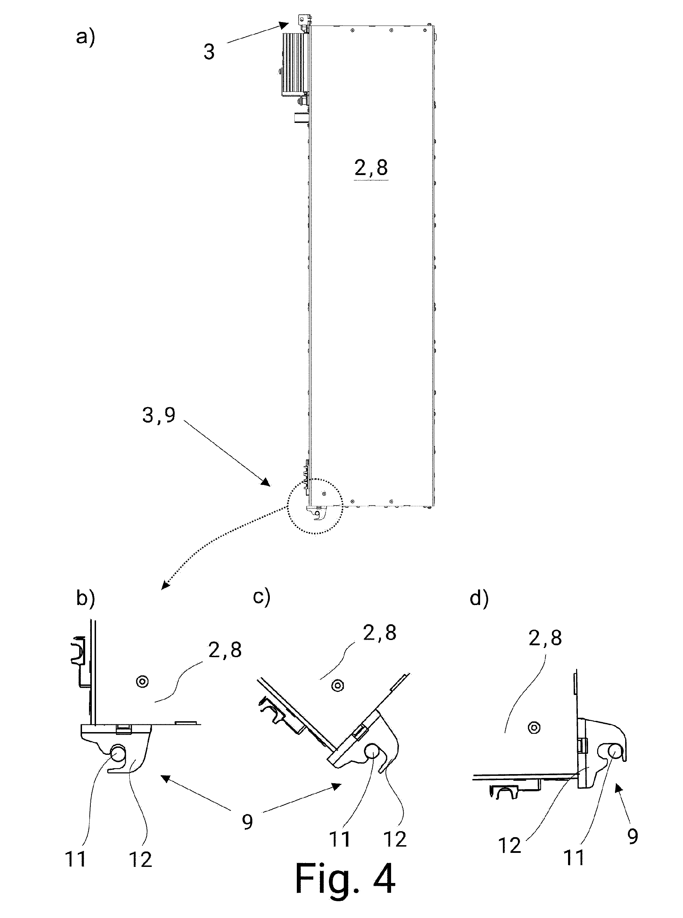

Fig. 4 zeigt eine Detailansicht der Schwenklagerung 9. Dort ist erkennbar, dass die Schwenklagerung 9 ein Lagerelement 11 aufweisen kann und dass das Leistungsmodul 2 vorzugsweise ein Gehäuse 8 aufweist, an dem ein Gegenlagerelement 12 angeordnet ist. Es ist dann vorgesehen, dass das Gegenlagerelement 12 mit dem Lagerelement 11 zusammenwirkt, um die Schwenklagerung 9 bereitzustellen. Es ist erkennbar, dass das Leistungsmodul 2 aus der montierten Position in Fig. 4b) nur durch Verschwenken bewegt werden kann. Erst in der Wartungsposition in Fig. 4d) können das Lagerelement 11 und das Gegenlagerelement 12 voneinander gelöst werden, wodurch die Schwenklagerung 9 demontiert wird und das Leistungsmodul 2 nach oben entnommen werden kann.

Hier und vorzugsweise wird das Leistungsmodul 2 beim Verschwenken oder im Anschluss an das Verschwenken linear verlagert, wodurch die Schwenklagerung 9 entsichert wird, sodass das Leistungsmodul 2 entnommen werden kann. Fig. 4d) zeigt den Zustand nach der Verlagerung. Vorzugsweise ist das Lagerelement 11 ein horizontal ausgerichteter Stift und das Gegenlagerelement 12 ist hakenförmig ausgestaltet und umgreift in der montierten Position den Stift.

Hier und vorzugsweise umgreift das Gegenlagerelement 12 während eines Schwenkens des Leistungsmoduls 2 das Lagerelement 11. In der montierten Position ist das Gegenlagerelement 12 vorzugsweise von dem Lagerelement 11 in mindestens einer Richtung, insbesondere vertikaler Richtung, entkoppelt. In Fig. 4a) ist dazu ein geringes Spiel zwischen dem Lagerelement 11 und dem Gegenlagerelement 12 erkennbar. Hier und vorzugsweise steht das Leistungsmodul 2 in der montierten Position auf einer Komponente der Schnellladestation 1 im Übrigen, insbesondere auf einem Boden der Aufnahme 10. Durch diese Entkopplung zwischen dem Lagerelement 11 und dem Gegenlagerelement 12 wird ein ungewolltes Zurückschwenken des Leistungsmoduls 2 verhindert. Hier und vorzugsweise weist die Aufnahme 10 Kunststoffkufen auf, auf denen das Leistungsmodul 2 in der montierten Position steht.

Somit ist ganz allgemein festzuhalten, dass die Schwenklagerung 9 hier und vorzugsweise in der montierten Position entkoppelt ist. Ein Verschwenken des Leistungsmoduls 2 beginnt daher hier und vorzugsweise mit einer Verstellung, insbesondere einem Schwenken über eine Kante, des Leistungsmoduls 2, die ein Einkoppeln der Schwenklagerung 9 bewirkt.

Um das Leistungsmodul 2 in der montierten Position zu sichern, kann vorgesehen sein, dass die Schnellladestation 1 einen, insbesondere teleskopierbaren, Modulfuß 13 aufweist. Der Modulfuß 13 stützt in der Wartungsposition das Leistungsmodul 2 am Boden ab. Der Modulfuß 13 ist hier und vorzugsweise schwenkbar an dem Leistungsmodul 2 befestigt. Vorzugsweise ist der Modulfuß 13 lösbar, insbesondere werkzeuglos über eine Rastverbindung, mit dem Leistungsmodul 2 verbindbar und/oder von diesem lösbar. Besonders bevorzugt ist der Modulfuß 13 in der Schnellladestation 1 verstaut, wenn der Modulfuß 13 nicht benutzt wird. Ein Wartungstechniker muss den Modulfuß 13 also nicht mitbringen und es muss auch nicht ein Modulfuß 13 pro Leistungsmodul 2 vorhanden sein. Stattdessen wird der Modulfuß 13 in einer dedizierten Stauposition, hier und vorzugsweise an einer Wartungsklappe 14, der Schnellladestation 1 befestigt und kommt bei Bedarf an dem Leistungsmodul 2 zum Einsatz, das gewartet werden soll.

In der Wartungsposition liegt das Leistungsmodul 2 hier und vorzugsweise auf dem Modulfuß 13 und der Schwenklagerung 9 auf (Fig. 3).

Weiter ist hier und vorzugsweise vorgesehen, dass die Schnellladestation 1 mindestens einen, vorzugsweise zwei, Modulgriffe 15 aufweist und dass der Modulgriff 15 oder die Modulgriffe 15 lösbar, insbesondere werkzeuglos über eine Rastverbindung, mit dem Leistungsmodul 2 verbindbar und/oder lösbar ist oder sind. Auch der Modulgriff 15 oder die Modulgriffe 15 sind hier und vorzugsweise in einer Stauposition der Schnellladestation 1, insbesondere an der Wartungsklappe 14, befestigt.

Vorzugsweise sind die Modulgriffe 15 in der Wartungsposition so an dem Leistungsmodul 2, insbesondere an einer in der Wartungsposition oben befindlichen Seite des Leistungsmoduls 2, befestigbar, dass das Leistungsmodul 2 an den Modulgriffen 15 von der Befestigungsanordnung 3 gelöst werden kann. Auch der Modulgriff 15 oder die Modulgriffe 15 kommen vorzugsweise nach Bedarf bei einem der Leistungsmodule 2 zum Einsatz. Es ist also allgemein bevorzugt vorgesehen, dass die Schnellladestation 1 genau einen Modulfuß 13 und/oder genau zwei Modulgriffe 15 aufweist.

Mit Blick auf das allgemeine Wartungskonzept der Schnellladestation 1 ist es bevorzugt so, dass die Schnellladestation 1 ein Stationsgehäuse 7 aufweist und dass das Stationsgehäuse 7, insbesondere genau, einen Wartungszugang 16, insbesondere eine Wartungsklappe 14, aufweist. Bei dieser Wartungsklappe 14, hier ausgestaltet als Wartungstür, handelt es sich um die vordere Seitenwand 17 der Schnellladestation 1 in Fig. 1, die in Fig. 2 ausgeblendet und in Fig. 3 geöffnet angedeutet ist. Diese kann über den ebenfalls in Fig. 1 angedeuteten Türgriff 18 geöffnet werden und weist vorzugsweise ein Schloss auf.

Hier und vorzugsweise sind an der Wartungsklappe 14 ein Zahlungsterminal 19 und/oder ein Display 20 und/oder mindestens eine Steckeraufnahme 21 und/oder ein Stromzähler 22 und/oder Steuerelektronik angeordnet und bei geöffneter Wartungsklappe 14 zugänglich. Zugänglich meint dabei jeweils zugänglich zu Wartungszwecken. Das Display 20, das Zahlungsterminal 19 und die Steckeraufnahme 21 sind auch von außen zugänglich, können von dort jedoch meist nicht gewartet werden. Diese sind hier in die Wartungsklappe 14 eingesetzt und können bei geöffneter Wartungsklappe 14 von hinten gewartet werden. Der Zähler hat hier und vorzugsweise ebenfalls ein von außen ablesbares Display 20 und ist über eine Datenverbindung, hier Glasfaser, mit einem Shunt im Inneren der Schnellladestation 1 an den Gleichstromschienen 6 verbunden. Hier und vorzugsweise ist ein Stromzähler 22 pro Anschlusspunkt 4 vorgesehen, hier also zwei. Die Steuerelektronik ist hier und vorzugsweise innen an der Wartungsklappe 14 befestigt. Hier und vorzugsweise sind diverse Komponenten der Schnellladestation 1 zugänglich, ohne einen Berührschutz zu entfernen, insbesondere durch die Anordnung an der Wartungsklappe 14. Ein Öffnen der Wartungsklappe 14 führt hier und vorzugsweise aufgrund eines Kontaktschalters für die Wartungsklappe 14 zu einer Abschaltung der Schnellladestation 1. Die AC-Eingangsschienen können durch einen Berührschutz abgedeckt sein.

Hier und vorzugsweise sind alle Ladekabel 5 der Schnellladestation 1 an anderen Wänden des Stationsgehäuses 7 angeordnet, als die Wartungsklappe 14, hier an der rechten und linken Seitenwand 17 in Fig. 1.

Weiter ist hier und vorzugsweise vorgesehen, dass durch eine von der Wartungsklappe 14 freigegebene Öffnung (in Fig. 2 und Fig. 3 offen) die Leistungsmodule 2 schwenkbar sind. Ebenfalls können durch die von der Wartungsklappe 14 freigegebene Öffnung Sicherungen, insbesondere alle Sicherungen, der Schnellladestation 1 und/oder eine Steckdose, insb. Schuko Steckdose, und/oder Gleichstromschienen 6 und/oder Eingangsschienen und/oder ein Netzanschluss und/oder ein Staubfilter 23 zugänglich sein. Hier und vorzugsweise sind alle elektrischen und elektronischen Komponenten und/oder alle zu wartenden Komponenten der Schnellladestation 1 über die Wartungsklappe 14 zugänglich.

Bevorzugt ist, dass die Schnellladestation 1 vier Seitenwände 17 aufweist, dass an zwei gegenüberliegenden Seitenwänden 17 Ladekabel 5 angeschlagen sind, dass an einer der Seitenwände 17 die Wartungsklappe 14 angeordnet ist und dass an der vierten Seitenwand 17 keine Funktionseinheit der Schnellladestation 1 angeordnet ist, sodass ein Zugang zur vierten Seitenwand 17 während jedes Normalbetriebs und zu Wartungszwecken elektrischer und elektronischer Komponenten der Schnellladestation 1 nicht notwendig ist. Vorzugsweise ist die Schnellladestation 1 im Wesentlichen quaderförmig mit genau vier Seitenwänden 17 ausgestaltet. Fig. 3 zeigt auf dem Boden angedeutet, dass der zu Wartungszwecken benötigte Platz hier recht gering ausfällt.

Ebenfalls vorgesehen und bevorzugt ist, dass das Leistungsmodul 2 einen Gleichstromanschluss aufweist, dass der Gleichstromanschluss durch ein Verschwenken des Leistungsmoduls 2 aus der Wartungsposition in die montierte Position automatisch mit einer Gleichstromverteilung, insbesondere Gleichstromschiene 6, der Schnellladestation 1 kontaktiert wird, und/oder, dass das Leistungsmodul 2 einen Wechselstromanschluss aufweist, dass der Wechselstromanschluss durch ein Verschwenken des Leistungsmoduls 2 aus der Wartungsposition in die montierte Position automatisch mit einer Wechselstromverteilung, insbesondere Wechselstromschiene, der Schnellladestation 1 kontaktiert wird. Der Gleichstromanschluss und/oder der Wechselstromanschluss kann ein Stecker oder eine Buchse sein, die mit einem entsprechenden Gegenstück an der Schnellladestation 1 im Übrigen kontaktiert wird. Alternative weitere Kontaktierungsmöglichkeiten sind denkbar. So oder so kann die Kontaktierung alleine durch das Verschwenken geschehen oder nachträglich durch einen Wartungstechniker gesichert werden, zum Beispiel durch das Anbringen einer Klemme an zwei Schienen, die durch das Verschwenken aneinander anliegen. Der Gleichstromanschluss und/oder der Wechselstromanschluss kann federnd ausgestaltet sein und/oder auf ein federndes Gegenstück treffen, um etwas Spiel auszugleichen und eine sichere Kontaktierung zu gewährleisten.

Weiter ist hier und vorzugsweise vorgesehen, dass die Schnellladestation 1 mindestens 3, vorzugsweise mindestens 4, weiter vorzugsweise mindestens 5 Leistungsmodule 2 aufweist, die gemeinsam mindestens 150 kW, vorzugsweise mindestens 175 kW, weiter vorzugsweise mindestens 200 kW Leistung stellen.

Vorgeschlagen wird gemäß einer weiteren Lehre ein Verfahren zur Wartung einer vorschlagsgemäßen Schnellladestation 1, wobei ein Leistungsmodul 2 aus der Schnellladestation 1 geschwenkt wird, vorzugsweise, wobei der Modulgriff 15 und/oder der Modulfuß 13 mit einem der Leistungsmodule 2 verbunden werden.

Auf alle Ausführungen zu der vorschlagsgemäßen Schnellladestation 1 darf verwiesen werden.

## Patentansprüche

1. Schnellladestation für Elektrofahrzeuge mit mindestens einem Leistungsmodul (2), wobei das Leistungsmodul (2) Leistungselektronik, insbesondere einen Stromwandler, aufweist, wobei das Leistungsmodul (2) in einer montierten Position über eine Befestigungsanordnung (3) in der Schnellladestation (1) befestigt ist,
**dadurch gekennzeichnet,**
**dass** die Befestigungsanordnung (3) eine Schwenklagerung (9) aufweist, über die das Leistungsmodul (2) schwenkbar befestigt ist, sodass das Leistungsmodul (2) zwischen der montierten Position und einer Wartungsposition verschwenkbar ist.

2. Schnellladestation nach Anspruch 1, **dadurch gekennzeichnet, dass** das Leistungsmodul (2) in der montierten Position erst in die Wartungsposition verschwenkt werden muss, bevor das Leistungsmodul (2) von der Befestigungsanordnung (3) gelöst und aus der Schnellladestation (1) entnommen werden kann, und/oder, dass die Befestigungsanordnung (3) lösbare Befestigungselemente, insbesondere Stifte, aufweist, mit denen das Leistungsmodul (2) in der montierten Position gegen das Verschwenken gesichert ist.

3. Schnellladestation nach Anspruch 1 oder 2, **dadurch gekennzeichnet, dass** die Schwenklagerung (9) ein Lagerelement (11) aufweist, dass das Leistungsmodul (2) ein Gehäuse (8) aufweist, dass an dem Gehäuse (8) ein Gegenlagerelement (12) angeordnet ist, dass das Gegenlagerelement (12) mit dem Lagerelement (11) zusammenwirkt, um die Schwenklagerung (9) bereitzustellen, vorzugsweise, dass das Lagerelement (11) ein horizontal ausgerichteter Stift ist, dass das Gegenlagerelement (12) hakenförmig ausgestaltet ist und in der montierten Position den Stift umgreift.

4. Schnellladestation nach einem der vorhergehenden Ansprüche, **dadurch gekennzeichnet, dass** die Schnellladestation (1) einen, insbesondere teleskopierbaren, Modulfuß (13) aufweist, dass der Modulfuß (13) in der Wartungsposition das Leistungsmodul (2) am Boden abstützt, vorzugsweise, dass der Modulfuß (13) lösbar, insbesondere werkzeuglos über eine Rastverbindung, mit dem Leistungsmodul (2) verbindbar ist, und/oder, dass das Leistungsmodul (2) in der Wartungsposition auf dem Modulfuß (13) und der Schwenklagerung (9) aufliegt.

5. Schnellladestation nach einem der vorhergehenden Ansprüche, **dadurch gekennzeichnet, dass** die Schnellladestation (1) mindestens einen, vorzugsweise zwei, Modulgriffe (15) aufweist, dass der Modulgriff (15) oder die Modulgriffe (15) lösbar, insbesondere werkzeuglos über eine Rastverbindung, mit dem Leistungsmodul (2) verbindbar ist oder sind, vorzugsweise, dass die Modulgriffe (15) in der Wartungsposition so an dem Leistungsmodul (2), insbesondere an einer in der Wartungsposition oben befindlichen Seite des Leistungsmoduls (2), befestigbar sind, dass das Leistungsmodul (2) an den Modulgriffen (15) von der Befestigungsanordnung (3) gelöst werden kann.

6. Schnellladestation nach einem der vorhergehenden Ansprüche, **dadurch gekennzeichnet, dass** die Schnellladestation (1) ein Stationsgehäuse (7) aufweist, dass das Stationsgehäuse (7), insbesondere genau, einen Wartungszugang (16), insbesondere eine Wartungsklappe (14), aufweist, vorzugsweise, dass an der Wartungsklappe (14) ein Zahlungsterminal (19) und/oder ein Display (20) und/oder mindestens eine Steckeraufnahme (21) und/oder ein Stromzähler (22) und/oder Steuerelektronik angeordnet und bei geöffneter Wartungsklappe (14) zugänglich ist, und/oder, dass alle Ladekabel (5) der Schnellladestation (1) an anderen Wänden des Stationsgehäuses (7) angeordnet sind, als die Wartungsklappe (14).

7. Schnellladestation nach Anspruch 6, **dadurch gekennzeichnet, dass** durch eine von der Wartungsklappe (14) freigegebene Öffnung die Leistungsmodule (2) schwenkbar sind, vorzugsweise, dass durch die von der Wartungsklappe (14) freigegebene Öffnung Sicherungen, insbesondere alle Sicherungen, der Schnellladestation (1) und/oder eine Steckdose, insb. Schuko Steckdose, und/oder Gleichstromschienen (6) und/oder Wechselstromschienen und/oder ein Netzanschluss und/oder ein Staubfilter (23) zugänglich sind.

8. Schnellladestation nach Anspruch 6 oder 7, **dadurch gekennzeichnet, dass** die Schnellladestation (1) vier Seitenwände (17) aufweist, dass an zwei gegenüberliegenden Seitenwänden (17) Ladekabel (5) angeschlagen sind, dass an einer der Seitenwände (17) die Wartungsklappe (14) angeordnet ist, dass an der vierten Seitenwand (17) keine Funktionseinheit der Schnellladestation (1) angeordnet ist, sodass ein Zugang zur vierten Seitenwand (17) während jedes Normalbetriebs und zu Wartungszwecken elektrischer und elektronischer Komponenten der Schnellladestation (1) nicht notwendig ist, vorzugsweise, dass die Schnellladestation (1) im Wesentlichen quaderförmig mit genau vier Seitenwänden (17) ausgestaltet ist.

9. Schnellladestation nach einem der vorhergehenden Ansprüche, **dadurch gekennzeichnet, dass** das Leistungsmodul (2) einen Gleichstromanschluss aufweist, dass der Gleichstromanschluss durch ein Verschwenken des Leistungsmoduls (2) aus der Wartungsposition in die montierte Position automatisch mit einer Gleichstromverteilung, insbesondere Gleichstromschiene (6), der Schnellladestation (1) kontaktiert wird, und/oder, dass das Leistungsmodul (2) einen Wechselstromanschluss aufweist, dass der Wechselstromanschluss durch ein Verschwenken des Leistungsmoduls (2) aus der Wartungsposition in die montierte Position automatisch mit einer Wechselstromverteilung, insbesondere Wechselstromschiene, der Schnellladestation (1) kontaktiert wird.

10. Schnellladestation nach einem der vorhergehenden Ansprüche, **dadurch gekennzeichnet, dass** die Schnellladestation (1) mindestens 3, vorzugsweise mindestens 4, weiter vorzugsweise mindestens 5 Leistungsmodule (2) aufweist, die gemeinsam mindestens 150 kW, vorzugsweise mindestens 175 kW, weiter vorzugsweise mindestens 200 kW Leistung stellen.

11. Verfahren zur Wartung einer Schnellladestation (1) nach einem der vorhergehenden Ansprüche, wobei ein Leistungsmodul (2) aus der Schnellladestation (1) geschwenkt wird, vorzugsweise, wobei der Modulgriff (15) und/oder der Modulfuß (13) mit einem der Leistungsmodule (2) verbunden werden.
